# FASCICULE DE BREVET EUROPEEN

(11) **EP 2 859 704 B1**
(45) Date de publication et mention de la délivrance du brevet: **02.12.2020**
(21) Numéro de dépôt: 13733364.7
(22) Date de dépôt: 06.06.2013
(51) Int. Cl.: H04L 29/08, H04L 29/06

(54) **SERVEUR D'APPLICATION ET PROCEDE DE TRAITEMENT D'UN MESSAGE DESTINE A UNE IDENTITE PUBLIQUE PARTAGEE PAR UNE PLURALITE DE DISPOSITIFS**
ANWENDUNGSSERVER UND VERFAHREN ZUR VERARBEITUNG EINER NACHRICHT FÜR EINE VON MEHREREN VORRICHTUNGEN GETEILTE ÖFFENTLICHE IDENTITÄT
APPLICATION SERVER AND METHOD FOR PROCESSING A MESSAGE INTENDED FOR A PUBLIC IDENTITY SHARED BY A PLURALITY OF DEVICES

(30) Priorité: 12.06.2012 FR 1255503
(43) Date de publication de la demande: 15.04.2015
(73) Titulaire: ORANGE, 75015 Paris (FR)
(72) Inventeur: BOUVET, Bertrand, F-22700 Perros Guirec (FR)
(74) Mandataire: Cabinet Beau de Loménie
(86) Numéro de dépôt international: PCT/FR2013/051299
(87) Numéro de publication internationale: WO 2013/186466

(56) Documents cités:
- EP-A1- 2 222 024
- WO-A1-2010/099829
- US-A1- 2009 316 690
- "RCS-e Advanced Communications: Services and Client Specification version 1.1", , 8 avril 2011 (2011-04-08), pages 1-151, XP055031803, GSMA.COM Extrait de l'Internet: URL:http://www.gsma.com/rcs/product-specif ications/rcs-e-specifications/ [extrait le 2012-07-04]
- Anonymous: "RFC 3261 - SIP: Session Initiation Protocol", , 1 June 2002 (2002-06-01), XP055324488, Retrieved from the Internet: URL:https://tools.ietf.org/html/rfc3261 [retrieved on 2016-11-30]

## Description

### Arrière-plan de l'invention

L'invention se rapporte au domaine général des télécommunications et des architectures de réseau IP (Internet Protocol) multimédia, telles que des architectures de réseau utilisant notamment la technologie désignée par "voix sur IP" (ou VoIP pour Voice over IP).

Elle a une application privilégiée mais non limitative dans le contexte de cœurs de réseau IP multimédia mettant en œuvre le protocole d'initiation de sessions multimédia SIP (Session Initiation Protocol), défini par le standard IETF (Internet Engineering Task Force) et décrit dans le document RFC 3261 intitulé « SIP: Session Initiation Protocol », Juin 2002, édité par l'IETF.

L'invention s'applique notamment aux cœurs de réseau IP multimédia s'appuyant sur une architecture IMS (IP Multimedia Subsystem) telle que proposée par le standard 3GPP (Third Generation Partnership Project).

Toutefois, elle peut également être utilisée en association avec d'autres architectures de cœurs de réseau IP multimédia, telles que par exemple des architectures propriétaires, mettant en œuvre ou non le protocole SIP pour l'établissement de sessions multimédia (voix, texte, vidéo, données, etc.).

L'invention concerne plus particulièrement le traitement d'un message dit de découverte des capacités et de l'état du « distant », reçu en provenance d'un dispositif émetteur et destiné à une identité publique gérée par un cœur de réseau IP multimédia, ce message étant émis dans le cadre d'un service de communications multimédia offert par un opérateur de télécommunications ou par un fournisseur de service multimédia. De façon connue en soi, un tel message de découverte des capacités et de l'état du « distant » permet au dispositif émetteur d'être informé de l'état (ex. disponible, en communication, hors couverture, non enregistré, etc.) et des capacités d'un dispositif utilisant l'identité publique à laquelle est destiné le message (c'est-à-dire des services, des protocoles, et/ou des applications que ce dispositif supporte ou met en œuvre).

A titre illustratif, le service RCS-e (Rich Communication Suite - Enhanced), décrit dans le document « RCS-e Advanced Communications: Services and client spécification », version 1.1, Avril 8, 2011, est un service de communications multimédia dans lequel on utilise un tel message de découverte.

Le service RCS-e permet à deux dispositifs (ex. deux terminaux) enregistrés auprès d'un cœur de réseau IMS, d'établir une communication via un réseau à commutation de circuits non relié au cœur de réseau IMS (ex. via un réseau GSM (Global System for Mobile Communications)), puis en parallèle ou en marge de cette communication, d'utiliser, via un réseau à commutation de paquets connecté au cœur de réseau IMS (IP Multimedia Subsystem), des services multimédia additionnels dits de communication enrichie, tels que par exemple un service de transfert de photos, un service de messagerie instantanée, un service de partage de fichiers, etc.

Pour offrir de telles fonctionnalités, le service RCS-e prévoit, lors notamment de la création dans le répertoire d'un dispositif RCS-e d'un nouveau contact associé à une identité publique telle un numéro de téléphone ou une adresse SIP URI (Uniform Request Identifier), ou lors de l'établissement d'une communication entre un dispositif RCS-e et un autre dispositif associé à une identité publique, la mise en œuvre d'un mécanisme de découverte automatique de l'état et des capacités de ce contact ou de cet autre dispositif. Dans le cadre du service RCS-e, ce mécanisme se traduit par l'envoi, par le dispositif RCS-e, d'un message SIP OPTIONS à destination de l'identité publique.

Ce message SIP OPTIONS est un « message de découverte des capacités et de l'état du distant » ou un « message de découverte des capacités et de l'état du dispositif associé à (ou partageant) l'identité publique» au sens de l'invention. Il invite le dispositif associé à l'identité publique à déclarer, en réponse à ce message, d'une part son état et d'autre part ses capacités, c'est-à-dire les services, les protocoles, et/ou les applications qu'il supporte ou met en œuvre.

Conformément au protocole SIP, tout dispositif récepteur d'un message de découverte SIP OPTIONS est tenu d'y répondre de manière transparente, en envoyant au dispositif émetteur du message de découverte, un message de réponse traduisant son état et contenant ses capacités.

Ainsi, par exemple, si le dispositif récepteur du message de découverte est disponible et compatible avec le service RCS-e, il envoie un message de réponse 200 OK au dispositif émetteur du message de découverte, contenant dans un champ « feature tag » l'identifiant du service RCS-e, ainsi que les identifiants des autres services supportés par le dispositif récepteur (via d'autres features tag et/ou des sessions SDP (Session Description Protocol)). Le message de réponse 200 OK contient également les méthodes SIP supportées par le dispositif récepteur, etc.

Dans un cœur de réseau IP multimédia s'appuyant sur une architecture IMS telle que définie par le standard 3GPP, une même identité publique d'usager (aussi désignée par IMPU pour IMS Public User identity) peut être associée à un dispositif unique (tel qu'un terminal, une passerelle, un serveur, etc.) ou être partagée par plusieurs dispositifs associés à des identités privées différentes (ou IMPI pour IMS Private user Identity). Cette identité publique est par exemple un numéro de téléphone, une adresse SIP URI, une adresse TEL URI, etc.

Dans l'état actuel du standard 3GPP, lorsqu'un message SIP OPTIONS est émis par un dispositif émetteur à destination d'une identité publique partagée par plusieurs dispositifs enregistrés auprès du cœur de réseau IMS, ce message SIP OPTIONS est répliqué par une fonction de réplication (ou « forking function » en anglais) mise en œuvre au niveau du serveur d'enregistrement S-CSCF (Serving-Call State Control Function) du cœur de réseau IMS par lequel transite le message SIP OPTIONS, puis les répliques du message SIP OPTIONS sont transmises par la fonction de réplication aux dispositifs enregistrés partageant l'identité publique. Le serveur S-CSCF est alors configuré conformément à la standardisation pour renvoyer vers le dispositif émetteur la première réponse à un message SIP OPTIONS répliqué qu'il reçoit d'un dispositif enregistré.

Un tel mode de fonctionnement, s'il assure qu'une réponse au message SIP OPTIONS est effectivement fournie au dispositif émetteur, ne garantit malheureusement pas que les informations remontées dans cette réponse vers le dispositif émetteur soient très pertinentes pour la mise en œuvre du service multimédia s'appuyant sur le mécanisme de découverte. Or ces informations sont prises en compte lors de la mise en œuvre du service multimédia, et ont donc une influence directe sur le niveau et la qualité du service fourni.

Le document WO 2010/099829 décrit un procédé permettant de traiter un message de découverte des capacités et de l'état dans un réseau de communication.

Il existe donc un besoin d'un mécanisme de traitement d'un message de découverte des capacités et de l'état du distant émis à destination d'une identité publique partagée par plusieurs dispositifs ne présentant pas un tel inconvénient, tout en respectant les contraintes de réponse au message SIP OPTIONS imposées notamment par le standard 3GPP.

### Objet et résumé de l'invention

L'invention répond notamment à ce besoin en proposant un procédé de traitement d'un message reçu en provenance d'un dispositif émetteur, destiné à une identité publique gérée par un cœur de réseau IP multimédia et partagée par une pluralité de dispositifs, ce message étant un message dit principal, de découverte des capacités et d'un état d'un dit dispositif partageant l'identité publique, ce procédé étant destiné à être mis en œuvre par un serveur d'application du cœur de réseau, déclenché en amont d'une fonction de réplication implémentée par un serveur d'enregistrement du cœur de réseau gérant l'identité publique, cette fonction de réplication étant adaptée à répliquer des messages destinés à l'identité publique et à transmettre les messages répliqués vers ladite pluralité de dispositifs partageant l'identité publique. Conformément à l'invention, le procédé de traitement comprend, sur réception du message principal de découverte, si plusieurs dispositifs parmi ladite pluralité de dispositifs partageant l'identité publique sont enregistrés auprès du cœur de réseau :
- une étape d'envoi, à destination d'au moins un dispositif de la pluralité de dispositifs enregistré auprès du cœur de réseau, d'un message dit secondaire de découverte des capacités et d'un état de ce dispositif ;
- une étape d'élaboration d'une réponse au message principal de découverte à partir d'au moins une réponse d'un dispositif enregistré à un message secondaire de découverte reçue dans une période de temps prédéterminée, cette réponse étant représentative d'un état et des capacités de ce dispositif ; et
- une étape d'envoi au dispositif émetteur de la réponse élaborée au message principal de découverte.

Corrélativement, l'invention vise aussi un serveur d'application d'un cœur de réseau IP multimédia gérant une identité publique partagée par une pluralité de dispositifs, ce serveur d'application étant déclenché en amont d'une fonction de réplication implémentée par un serveur d'enregistrement du cœur de réseau gérant l'identité publique, cette fonction de réplication étant adaptée à répliquer des messages destinés à l'identité publique et à transmettre les messages répliqués vers ladite pluralité de dispositifs partageant l'identité publique. Conformément à l'invention, le serveur d'application comprend :
- des moyens pour déterminer si plusieurs dispositifs parmi la pluralité de dispositifs partageant l'identité publique sont enregistrés auprès du cœur de réseau, ces moyens étant activés sur réception d'un message dit principal de découverte des capacités et de l'état d'un dit dispositif partageant l'identité publique, ce message principal provenant d'un dispositif émetteur et étant destiné à l'identité publique ;
- des moyens, activés le cas échéant :
   ∘ pour envoyer à destination d'au moins un dispositif de la pluralité de dispositifs enregistré auprès du cœur de réseau, un message dit secondaire de découverte des capacités et d'un état de ce dispositif ;
   ∘ pour élaborer une réponse au message principal de découverte à partir d'au moins une réponse à un message secondaire de découverte reçue dans une période de temps prédéterminée d'un dispositif enregistré, cette réponse étant représentative d'un état et des capacités de ce dispositif ; et
   ∘ pour envoyer au dispositif émetteur la réponse au message principal de découverte élaborée.

L'invention offre ainsi une solution plus souple et plus flexible que celle envisagée aujourd'hui dans le standard 3GPP pour répondre au message de découverte des capacités et de l'état du distant envoyé par le dispositif émetteur à destination de l'identité publique, tout en respectant les contraintes imposées par le standard 3GPP et le protocole SIP concernant notamment l'obligation de réponse au message de découverte et l'exigence de transparence dans les réponses renvoyées par les dispositifs partageant l'identité publique.

Plus précisément, l'invention propose non plus de renvoyer systématiquement vers le dispositif émetteur la première réponse reçue d'un dispositif enregistré partageant l'identité commune, mais d'élaborer une réponse à partir d'au moins une réponse reçue d'un dispositif enregistré dans une période de temps prédéterminée. L'introduction de cette période de temps prédéterminée permet au serveur d'application de ne pas attendre indûment une réponse d'un dispositif enregistré auprès du cœur de réseau qui n'est pas apte à répondre, par exemple parce qu'il n'est plus connecté au cœur de réseau bien que toujours enregistré auprès de celui-ci. Une telle situation peut se présenter notamment lorsque le dispositif est éteint brusquement ou sort de la couverture du réseau sans avoir le temps de se désenregistrer auprès du cœur de réseau.

L'invention offre ainsi la possibilité d'élaborer une réponse mieux adaptée au message de découverte adressé par le dispositif émetteur à l'identité publique, en prenant en compte tout ou partie des informations contenues dans les réponses des dispositifs enregistrés partageant l'identité publique.

A cette fin, elle s'adapte avantageusement à l'existence d'une fonction de réplication au niveau du serveur d'enregistrement du cœur de réseau gérant l'identité publique déclenchée lors de la détection de messages destinés à l'identité publique, et permet de passer outre cette fonction de réplication grâce à la combinaison de deux caractéristiques, à savoir :
- d'une part, le traitement du message principal de découverte conformément à l'invention est réalisé au niveau d'un serveur d'application déclenché en amont de cette fonction de réplication ; et
- d'autre part, les messages de découverte secondaires sont destinés directement aux dispositifs enregistrés conformément à l'invention (autrement dit, les messages secondaires contiennent une information de joignabilité des dispositifs enregistrés auxquels ils sont destinés dans le champ de destination de ces messages (ex. dans le champ R-URI pour un message SIP OPTIONS)), et non plus à l'identité publique partagée. Ainsi, en envoyant lui-même les messages secondaires de découverte à destination des dispositifs enregistrés, le serveur d'application selon l'invention inhibe la fonction de réplication habituellement mise en œuvre par le serveur d'enregistrement sur réception d'un message de découverte destinée à une identité publique partagée par plusieurs dispositifs enregistrés auprès du cœur de réseau.

En outre, l'ensemble des réponses aux messages secondaires émis par le serveur d'application transitent selon un chemin inverse aux messages secondaires et sont donc reçus par le serveur d'application, de sorte que celui-ci peut élaborer une réponse au message principal à partir de tout ou partie de ces réponses.

Il convient de noter que comme mentionné précédemment, l'invention a une application privilégiée mais non limitative lorsque le cœur de réseau met en œuvre le protocole d'initiation de session SIP et le message principal et les messages secondaires de découverte sont des messages SIP OPTIONS.

Différentes stratégies peuvent être envisagées dans le cadre de l'invention pour l'élaboration de la réponse au message principal de découverte émis par le dispositif émetteur.

Ainsi, selon une première variante, la réponse au message principal de découverte correspond à la réponse reçue d'un dispositif considéré comme prioritaire parmi les dispositifs enregistrés partageant l'identité publique et ayant répondu aux messages secondaires de découverte dans la période de temps prédéterminée.

On s'assure ainsi que les capacités et l'état remontés vers le dispositif émetteur correspondent au dispositif ayant la probabilité la plus importante de dialoguer ou d'établir une communication avec le dispositif émetteur. Ceci permet d'améliorer la qualité du service multimédia fourni qui s'appuie sur les informations de capacités et d'état remontées vers le dispositif émetteur, puisque ces informations sont plus pertinentes que les informations remontées par l'état de la technique qui correspondent finalement à un dispositif choisi arbitrairement parmi les dispositifs enregistrés partageant l'identité commune.

Lorsque le cœur de réseau met en œuvre le protocole d'initiation de session SIP, le dispositif considéré comme prioritaire peut être notamment le dispositif ayant le plus grand paramètre q tel que défini dans le document RFC 3261 de l'IETF.

Si au moins deux dispositifs sont considérés comme prioritaires parmi les dispositifs enregistrés partageant l'identité publique ayant répondu aux messages secondaires de découverte dans la période de temps prédéterminée, la réponse au message principal correspondra préférentiellement à la réponse reçue du dispositif prioritaire ayant la période d'expiration d'enregistrement la plus élevée parmi ces dispositifs prioritaires.

Autrement dit, on choisira la réponse reçue du dispositif prioritaire qui s'est enregistré ou réenregistré en dernier auprès du cœur de réseau IP multimédia, et qui présente la probabilité la plus importante d'être actif pour l'établissement d'un dialogue ou d'une communication avec le dispositif émetteur.

Selon une deuxième variante, la réponse au message principal de découverte contient tout ou partie des capacités de chaque dispositif enregistré ayant répondu à un dit message secondaire de découverte pendant la période prédéterminée.

On offre ainsi au dispositif émetteur une vue d'ensemble des services, protocoles et/ou applications supportés par les différents dispositifs enregistrés auprès du cœur de réseau IP multimédia et partageant l'identité publique.

La fourniture de tout ou partie des capacités des dispositifs enregistrés peut être paramétrée par l'utilisateur de ces dispositifs, via par exemple une interface web. Elle peut être conditionnée par différents facteurs. Ainsi, par exemple, elle peut dépendre de l'identifiant du dispositif émetteur, de la date/heure à laquelle le message principal de découverte a été émis, ou du nombre de sessions actives déjà en cours au niveau des dispositifs enregistrés, etc.

Il en est de même pour la stratégie retenue pour élaborer la réponse au message principal de découverte. Cette stratégie peut être paramétrable et varier en fonction de divers éléments, comme par exemple du service multimédia dans le contexte duquel le mécanisme de découverte est mis en œuvre, ou du dispositif émetteur du message de découverte (ex. selon si l'identifiant de ce dispositif vérifie certaines conditions prédéterminées), etc.

D'autres stratégies distinctes des variantes mentionnées précédemment peuvent également être appliquées pour élaborer la réponse au message principal de découverte. Ainsi, selon une autre variante, la réponse au message principal de découverte correspond à la réponse reçue qui identifie le plus grand nombre de services ou de types de services distincts supportés.

Dans un mode particulier de réalisation, le procédé selon l'invention comprend une étape d'interrogation du serveur d'enregistrement pour identifier les dispositifs parmi ladite pluralité de dispositifs partageant l'identité publique enregistrés auprès du cœur de réseau.

Lorsque le cœur de réseau IP multimédia met en œuvre le protocole d'initiation de session SIP, cette étape d'interrogation du serveur d'enregistrement peut comprendre l'envoi d'une requête SIP REGISTER au cœur de réseau sans adresse de contact.

De façon connue, le serveur d'application reçoit alors en réponse à cette étape d'interrogation un message 200 OK contenant notamment les informations de joignabilité (ex. adresse de contact) des dispositifs enregistrés partageant l'identité commune, ainsi que d'autres types d'informations sur ces dispositifs, tels que par exemple un paramètre de priorisation associé à chacun de ces dispositifs (ex. paramètre q défini par le document RFC 3261), une valeur d'expiration de l'enregistrement de chaque dispositif, optionnellement le ou les services supportés (feature tag), etc.

Dans un autre mode de réalisation, le procédé comprend en outre une étape préalable d'abonnement du serveur d'application auprès du serveur d'enregistrement afin d'être notifié lorsqu'un dispositif de la pluralité de dispositifs partageant l'identité publique s'enregistre auprès du cœur de réseau.

Lorsque le cœur de réseau IP multimédia met en œuvre le protocole SIP, l'abonnement du serveur d'application peut se faire via le mécanisme prévu par le standard 3GPP et connu sous le nom de « Third Party Registration ». Ce mécanisme permet aux serveurs d'applications qui le souhaitent et s'abonnent de recevoir les messages d'enregistrement SIP des dispositifs auprès du cœur de réseau IP multimédia. Les serveurs d'applications sont ainsi informés en temps réel de la liste des dispositifs enregistrés auprès du cœur de réseau et de leurs informations de joignabilité (ex. adresses de contact).

Selon un autre aspect, l'invention vise aussi un système de communications comprenant :
- une pluralité de dispositifs partageant une identité publique gérée par un cœur de réseau IP multimédia ;
- un dispositif émetteur apte à émettre, à destination de cette identité publique, un message principal de découverte des capacités et de l'état d'un dit dispositif partageant cette identité publique ; et
- un serveur d'application du cœur de réseau apte à traiter ce message principal de découverte et conforme à l'invention.

Ce système bénéficie des mêmes avantages que ceux décrits précédemment pour le procédé de traitement et le serveur d'application.

Dans un mode particulier de réalisation, les différentes étapes du procédé de traitement sont déterminées par des instructions de programmes d'ordinateurs.

En conséquence, l'invention vise aussi un programme d'ordinateur sur un support d'informations, ce programme étant susceptible d'être mis en œuvre dans un serveur d'application ou plus généralement dans un ordinateur, ce programme comportant des instructions adaptées à la mise en œuvre des étapes d'un procédé de traitement tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

On peut également envisager, dans d'autres modes de réalisation, que le procédé de traitement, le serveur d'application et le système de communications selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, de façon schématique, dans son environnement, un système de communications et un serveur d'application conformes à l'invention dans un mode particulier de réalisation ;
- la figure 2 représente, de façon schématique, l'architecture matérielle du serveur d'application de la figure 1, dans un mode particulier de réalisation ; et
- la figure 3 représente, sous forme d'ordinogramme, les principales étapes d'un procédé de traitement d'un message de découverte conforme à l'invention, dans un mode particulier de réalisation dans lequel il est mis en œuvre par le serveur d'application de la figure 1.

### Description détaillée de l'invention

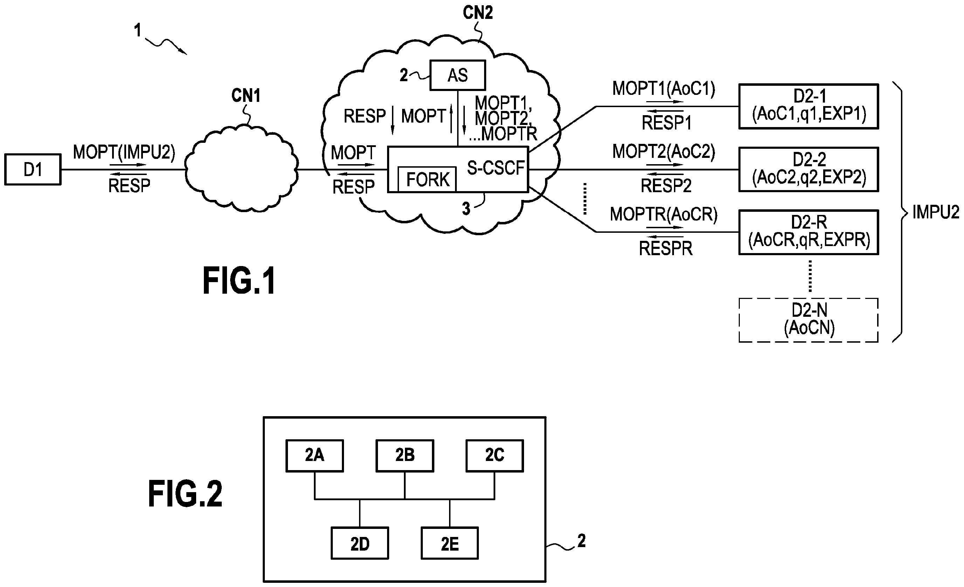

La **figure 1** représente un système de communications 1 conforme à l'invention, dans son environnement, dans un mode particulier de réalisation.

Le système de communications 1 comprend une pluralité de dispositifs multimédia D1, D2-1, ..., D2-N. Ces dispositifs D1, D2-1, D2-2, ..., D2-N sont par exemple des terminaux multimédia tels que des téléphones mobiles intelligents (ou « smartphones » en anglais), aptes à communiquer entre eux par l'intermédiaire de cœurs de réseau IP multimédia CN1 et CN2.

Les cœurs de réseau CN1 et CN2 sont, dans le mode de réalisation décrit ici, des cœurs de réseau utilisant la technologie dite de « voix sur IP » (VoIP), gérant respectivement le dispositif D1 et les dispositifs D2-1, D2-2, ..., D2-N.

Ils implémentent par ailleurs ici, une architecture IMS mettant en œuvre le protocole d'initiation de session SIP, telle que définie dans le document 3GPP TS 22.228 « Service requirements for the IP Multimedia Core Network Subsystem (Stage 1) ».

De façon connue de l'homme du métier, un cœur de réseau implémentant une architecture IMS comprend plusieurs entités fonctionnelles, dont notamment :
- une entité CSCF (Call Session Control Function), elle-même composée de plusieurs serveurs parmi lesquels notamment un serveur S-CSCF (Serving Call Session Control Function) en charge en particulier de l'enregistrement des terminaux sur le cœur de réseau, et un serveur P-CSCF (Proxy Call Session Control Function), point de contact des terminaux avec le cœur de réseau ; et
- un ou plusieurs serveurs d'applications (Application Servers) hébergeant et fournissant des services.

Il convient de noter que l'invention s'applique également lorsque les cœurs de réseau CN1 et CN2 ne forment qu'un seul cœur de réseau IP multimédia.

Elle s'applique aussi à d'autres types de dispositifs multimédia (tels que par exemple à des serveurs ou à des passerelles), à d'autres architectures de cœur de réseau IP multimédia, ainsi qu'à d'autres protocoles d'initiation de session (tels que par exemple à des architectures de cœurs de réseau propriétaires utilisant le protocole SIP ou un autre protocole d'initiation de session propriétaire ou standardisé prévoyant un message de découverte des capacités et de l'état du distant).

Dans l'exemple envisagé ici, les dispositifs D2-1, D2-2, ..., D2-N partagent la même identité publique ou IMPU, notée IMPU2. Cette identité publique est par exemple un numéro de téléphone ou une adresse SIP telle qu'une adresse SIP URI ou TEL URI.

Les dispositifs D2-1, D2-2, ..., D2-N sont identifiés à l'aide d'identités privées ou IMPI distinctes, et sont accessibles (i.e. joignables) par l'intermédiaire d'adresses de contact (ou AoC pour Address of Contact), notées respectivement AoC1, AoC2, ..., AoCN.

De façon connue, l'adresse de contact d'un dispositif dans le domaine IP comprend l'adresse IP du dispositif, un numéro de port associé à sa pile protocolaire (pile SIP ici), ainsi que le protocole de transport utilisé par le dispositif pour communiquer (ex. UDP (User Data Protocol), TCP (Transport Control Protocol), TLS (Transport Layer Security)). Cette adresse de contact définit l'adresse physique à laquelle le dispositif peut être joint. Il s'agit d'une information dite de joignabilité au sens de l'invention.

Le système de communications 1 comprend également un serveur d'application 2, apte à traiter, conformément à l'invention, les messages de découverte des capacités et de l'état du distant destinés à l'identité publique IMPU2. Ces messages de découverte sont, dans les contextes IMS et SIP envisagés ici, des messages SIP OPTIONS contenant dans leur champ R-URI (Request URI), l'identité publique IMPU2 partagée par les dispositifs D2-1, D2-2, ..., D2-N.

De façon connue, ces messages SIP OPTIONS permettent à leurs émetteurs de découvrir les capacités et l'état d'un dispositif associé à l'identité publique IMPU2.

Le serveur d'application 2 peut être un serveur dédié à la mise en œuvre du procédé de traitement des messages SIP OPTIONS selon l'invention ou un serveur d'application déjà existant et déclenché lors de la mise en œuvre d'autres applications.

Dans le mode de réalisation décrit ici, il est déclenché, sur détection d'un message de découverte SIP OPTIONS destiné à l'identité publique IMPU2, par un serveur d'enregistrement 3 ou serveur S-CSCF du cœur de réseau CN2 gérant l'enregistrement des dispositifs multimédia partageant l'identité publique IMPU2, et par lequel transitent les messages destinés à l'identité publique IMPU2.

Ce déclenchement du serveur d'application 2 est réalisé conformément à un critère de déclenchement ou iFC (initial Filter Criteria) mémorisé dans un profil de l'utilisateur auquel est allouée l'identité publique IMPU2, ce profil étant stocké au niveau du serveur d'abonnés HSS (Home Subscriber Server) du cœur de réseau IP multimédia CN2 (non représenté sur la figure 1).

Ce critère de déclenchement peut être positionné dans le profil de l'utilisateur par l'opérateur du cœur de réseau CN2, par exemple dès lors que l'offre de service autorise l'utilisation de plusieurs dispositifs multimédia partageant la même identité publique IMP2, ou en variante, il peut être positionné dans le profil de l'utilisateur sur requête de celui-ci (par exemple via la souscription à un service idoine auprès de l'opérateur du cœur de réseau CN2, ou via une interface web).

Conformément au standard 3GPP, le serveur d'enregistrement 3 met en œuvre, en présence d'un message destiné à une identité publique partagée par une pluralité de dispositifs enregistrés auprès du cœur de réseau (autrement dit un message contenant, dans son champ SIP R-URI, l'identité publique partagée), une fonction de réplication FORK de ce message (fonction aussi connue sous le nom de fonction de forking) en autant de répliques que de dispositifs enregistrés partageant l'identité publique, les messages répliqués étant ensuite transmis aux dispositifs enregistrés par la fonction de réplication en transitant par le serveur P-CSCF du cœur de réseau CN2 (non représenté sur la figure 1).

Conformément à l'invention, le serveur d'application 2 est déclenché par le serveur d'enregistrement 3 en amont de cette fonction FORK de réplication mise en œuvre par le serveur d'enregistrement 3, de sorte à inhiber l'application de cette fonction FORK par le serveur d'enregistrement 3 sur le message de découverte traité par le serveur d'application 2, comme décrit plus en détails ultérieurement. Par « amont », on entend ici que le serveur d'application 2 est déclenché avant l'application de la fonction FORK par le serveur d'enregistrement 3, en référence au chemin emprunté par le message de découverte dans le sens émetteur du message de découverte vers récepteur du message de découverte.

Le serveur d'application 2 dispose ici de l'architecture matérielle d'un ordinateur telle qu'illustrée schématiquement à la **figure 2**.

Il comporte notamment un processeur 2A, une mémoire vive 2B, une mémoire morte 2C, une mémoire flash non volatile 2D ainsi que des moyens de communication 2E mettant en œuvre notamment le protocole SIP. Ces moyens de communication lui permettent de communiquer avec les entités du cœur de réseau CN2 et avec les dispositifs D2-1, D-2,..., D2-N partageant l'identité publique IMPU2.

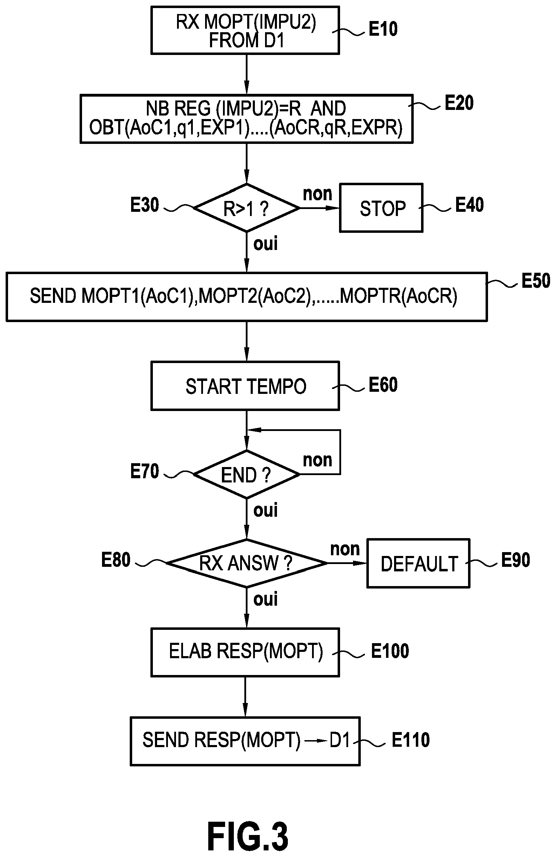

La mémoire morte 2C du serveur d'application 2 constitue un support d'enregistrement conforme à l'invention, lisible par le processeur 2A et sur lequel est enregistré un programme d'ordinateur conforme à l'invention, comportant des instructions pour l'exécution des étapes d'un procédé de traitement décrites maintenant en référence à la **figure 3**.

Pour faciliter la compréhension des étapes du procédé de traitement illustrées à la figure 3, on envisage le traitement par le serveur d'application 2 d'un message MOPT de découverte des capacités et de l'état du distant émis par le dispositif D1 à destination de l'identité publique IMPU2, dans le cadre d'un service de communication multimédia tel que par exemple un service RCS-e.

On suppose que le dispositif émetteur D1 est enregistré auprès du cœur de réseau CN1, et que parmi les dispositifs D2-1, D2-2,..., D2-N partageant l'identité publique IMPU2, R dispositifs D2-1, D2-2,..., D2-R, 1≤R≤N, sont enregistrés auprès du cœur de réseau CN2 gérant l'identité publique IMPU2.

Le message MOPT émis par le dispositif D1 est un message SIP OPTIONS, tel que décrit de façon détaillée dans le document RFC 3261 cité précédemment. Il contient notamment dans un champ FROM, un identifiant du dispositif D1 à l'origine du message, et dans un champ R-URI (Request URI) et dans un champ TO, l'identité publique IMPU2 à laquelle est destiné le message.

Le message MOPT émis par le dispositif D1 à destination de l'identité publique IMPU2 est reçu par le serveur d'enregistrement 3 du cœur de réseau CN2. Il s'agit d'un message principal de découverte au sens de l'invention.

Sur détection par le serveur d'enregistrement 3 qu'il s'agit d'un message de découverte des capacités et de l'état d'un dispositif associé à l'identité IMPU2 (autrement dit ici, d'un message SIP OPTIONS destiné à l'identité publique IMPU2), le serveur d'application 2 est déclenché conformément aux informations (critères iFC) contenues dans le profil de l'utilisateur auquel est allouée l'identité publique IMPU2, stocké dans le serveur HSS du cœur de réseau CN2. Le message MOPT reçu en provenance du dispositif D1 est transmis lors de ce déclenchement par le serveur d'enregistrement 3 au serveur d'application 2 pour traitement conformément à l'invention (étape E10).

Les mécanismes mis en œuvre pour la détection des messages SIP OPTIONS à destination de l'identité publique IMPU2 et pour le déclenchement du serveur d'application 2 sont connus de l'homme du métier ; ils ne seront donc pas décrits plus en détail ici.

Sur réception du message MOPT, le serveur d'application 2 détermine, dans un premier temps, si plusieurs dispositifs portant l'identité publique IMPU2 à laquelle est destiné le message MOPT sont enregistrés auprès du cœur de réseau CN2 (étape E20).

A cette fin, dans le mode de réalisation décrit ici, le serveur d'application 2 interroge le serveur d'enregistrement 3 en lui envoyant un message SIP REGISTER contenant l'identité publique IMPU2 mais ne contenant pas d'adresse de contact. Un tel message SIP REGISTER sans adresse de contact permet en effet, conformément au protocole SIP, d'obtenir du cœur de réseau CN2 des informations sur les dispositifs portant l'identité publique IMPU2 et qui sont enregistrés auprès du cœur de réseau.

L'envoi de ce message permet donc au serveur d'application 2 d'identifier les dispositifs partageant l'identité publique IMPU2 enregistrés auprès du cœur de réseau lors de la réception du message MOPT.

Les informations transmises par le serveur d'enregistrement 3 en réponse au message SIP REGISTER sans adresse de contact, sont des informations liées à l'enregistrement à proprement parler de chaque dispositif partageant l'identité publique IMPU2. Elles peuvent inclure notamment un identifiant du dispositif, son adresse de contact, ses capacités (« feature tags »), sa priorité par rapport aux autres dispositifs partageant l'identité publique IMPU2, la période EXP d'expiration d'enregistrement qui lui est associée, etc.

Dans l'exemple envisagé ici, les dispositifs D2-1, D2-2,..., D2-R, R≤N, sont enregistrés auprès du cœur de réseau CN2. Le serveur d'application 2 obtient donc, en réponse au message SIP REGISTER envoyé au serveur d'enregistrement 3, un message 200 OK contenant les adresses de contact AOC1, AOC2,..., AOCR des R dispositifs D2-1, D2-2,..., D2-R enregistrés auprès du cœur de réseau CN2 (étape E20).

Ce message de réponse 200 OK contient également ici, pour chaque dispositif D2-k, k=1,..., R, la période EXPk d'expiration d'enregistrement attribuée au dispositif D2-k, ainsi qu'un paramètre noté qk indiquant sa priorité par rapport à la pluralité de dispositifs enregistrés partageant l'identité publique IMPU2. Le paramètre qk associé au dispositif D2-k, k=1,...,R, correspond ici au paramètre q de priorité défini dans le document RFC 3261 cité précédemment.

Dans un autre mode de réalisation, le serveur d'application 2 détermine si plusieurs dispositifs partageant l'identité publique IMPU2 sont enregistrés auprès du cœur de réseau CN2 et identifie le cas échéant ces dispositifs, via le mécanisme « Third Party Registration » défini par le standard 3GPP (Third Generation Partnership Project).

De façon connue, ce mécanisme permet au serveur d'application 2 de s'abonner auprès du serveur d'enregistrement 3 afin d'être notifié lorsqu'un dispositif partageant l'identité publique IMPU2 s'enregistre auprès du cœur de réseau CN2. Lors de cette notification, le serveur d'application 2 reçoit une information de joignabilité du dispositif considéré telle que son adresse de contact du dispositif, ainsi que d'autres informations telles que sa période d'expiration d'enregistrement, sa priorité par rapport aux autres dispositifs partageant la même identité publique, etc.

Le serveur d'application 2 détermine à partir des informations reçues du serveur d'enregistrement 3 le nombre de dispositifs enregistrés auprès du cœur de réseau CN2 partageant l'identité publique IMPU2. Dans l'exemple envisagé ici, ce nombre est égal à R.

Puis il détermine si ce nombre R est supérieur à 1 pour décider du traitement à appliquer au message MOPT (étape test E30).

Si le nombre R est inférieur ou égal à 1 (réponse non à l'étape test E30), le serveur d'application 2 n'effectue pas de traitement spécifique sur le message MOPT (étape E40) : autrement dit, le message MOPT est relayé par le serveur d'application 2 vers le serveur d'enregistrement 3, sans en changer le contenu.

Puis le serveur d'enregistrement 3 transmet le message MOPT, le cas échéant, vers le seul dispositif enregistré portant l'identité publique IMPU2, lequel répond au message MOPT conformément à la norme, en fournissant son état et ses capacités.

Dans le mode de réalisation décrit ici, si au contraire, le nombre R est supérieur à 1 (réponse oui à l'étape test E30), le serveur d'application 2 envoie à chaque dispositif D2-k, k=1,...,R, un message SIP OPTIONS noté MOPTk, k=1,...,R, qui est une réplique du message MOPT reçu en provenance du dispositif D1, dans lequel le champ SIP R-URI contenant l'identité publique IMPU2 a été remplacé par l'adresse de contact AoCk du dispositif D2-k (étape E50). Les messages MOPTk, k=1,...,R, sont des messages «secondaires» de découverte au sens de l'invention.

Il convient de noter que conformément au fonctionnement du cœur de réseau CN2, chaque message MOPTk, k=1,...,R émis par le serveur d'application 2 à destination du dispositif D2-k, k=1,...,R, transite par le serveur d'enregistrement 3. Ces messages MOPTk, k=1,...,R contenant les adresses de contact AoCk dans leurs champs R-URI et non plus l'identité publique IMPU2, ne sont pas traités par la fonction de réplication FORK et ne sont donc pas répliqués par celle-ci. Le traitement appliqué par le serveur d'application 2 au cours de l'étape E50 permet donc avantageusement d'éviter la réplication du message SIP OPTIONS MOPT par la fonction FORK du serveur d'enregistrement 3, et d'inhiber *a fortiori* l'envoi par le serveur d'enregistrement 3 au dispositif D1, d'un message de réponse correspondant au premier message de réponse reçu des dispositifs D2-k.

Suite à l'émission des messages MOPTk à destination des dispositifs D2-k, Le serveur d'application 2 arme une temporisation TEMPO pour une période de temps prédéterminée T (étape E60). Cette période correspond à la durée pendant laquelle le serveur d'application 2 se met en attente des réponses des dispositifs D2-k aux messages MOPTk, k=1,...,R, avant d'élaborer une réponse au message de découverte MOPT reçu en provenance du dispositif D1. Le choix de la période T résulte d'un compromis entre performances et temps d'exécution nécessaire pour répondre au message SIP OPTIONS MOPT envoyé par le dispositif D1.

En parallèle de l'armement de la temporisation TEMPO par le serveur d'application 2, chaque dispositif D2-k, k=1,...,R répond au message MOPTk reçu en provenance du serveur d'application 2, en fournissant dans un message de réponse REPk, conformément au standard SIP, ses capacités (c'est-à-dire les services, les protocoles, et/ou les applications qu'il supporte ou met en œuvre) et son état (ex. disponible, en communication, hors couverture, non enregistré, etc.).

Chaque message de réponse REPk est ici similaire ou identique au message de réponse au message SIP OPTIONS prévu dans le document RFC 3261 de la norme SIP (même format et même contenu en ce qui concerne l'état et les capacités du dispositif D2-k).

La réponse REPk du dispositif D2-k emprunte le chemin inverse du message MOPTk, conformément au mode de fonctionnement du protocole SIP. Cette réponse transite donc par le serveur d'application 2.

On notera qu'il est possible qu'un dispositif D2-k apparaisse comme enregistré auprès du serveur d'enregistrement 3 bien que n'étant plus connecté au cœur de réseau CN2 lors de l'envoi du message MOPTk, du fait par exemple d'une perte brutale de connexion réseau ou d'une extinction subite du dispositif. Bien entendu, dans une telle situation, le dispositif D2-k ne peut recevoir le message MOPTk et/ou ne peut y répondre dans la période de temps prédéterminée T.

Lorsque la temporisation TEMPO expire (réponse oui à l'étape test E70), autrement dit, à l'issue de la période de temps T, ou si tous les dispositifs D2-k, k=1,..,R ont répondu avant la fin de la temporisation, le serveur d'application 2 détermine s'il a reçu une ou plusieurs réponses aux messages MOPTk envoyés vers les dispositifs D2-k (étape test E80).

S'il n'a reçu aucune réponse (réponse non à l'étape E80), il envoie à destination du dispositif D1 une réponse définie par défaut, traduisant l'absence de réponse des dispositifs partageant l'identité publique IMPU2 (étape 90). Par exemple, il peut envoyer un message de réponse « 480 temporarily Unavailable » à destination du dispositif D1 en réponse au message de découverte MOPT.

Si au moins une réponse a été reçue par le serveur d'application 2 pendant la période prédéterminée T, celui-ci élabore une réponse RESP au message de découverte MOPT à partir de ladite au moins une réponse reçue au cours de la période T, selon une règle RULE de réponse prédéfinie avec laquelle le serveur d'application 2 a été configuré au cours d'une étape préalable (étape E100).

Cette étape préalable de configuration du serveur d'application 2 consiste, à proprement parler, à transmettre au serveur d'application 2 la règle RULE à appliquer pour élaborer les réponses RESP aux messages SIP OPTIONS destinés à l'identité publique IMPU2.

Cette étape de configuration peut faire suite notamment à la mémorisation du critère iFC de déclenchement du serveur d'application 2 dans le profil de l'utilisateur auquel est alloué l'identité publique IMPU2.

En variante, elle peut être mise en œuvre suite à une interaction entre l'utilisateur et l'opérateur du cœur de réseau CN2, par exemple via une interface web, et au cours de laquelle l'utilisateur indique ses préférences quant à la règle qu'il souhaite voir appliquer aux messages SIP OPTIONS destinés à l'identité publique IMPU2.

La règle RULE définissant la stratégie de réponse au message SIP OPTIONS MOPT appliquée par le serveur d'application 2 peut être paramétrable : elle peut ainsi évoluer dans le temps et/ou dépendre de différents facteurs comme par exemple de l'identité publique IMPU2, du service à l'origine du message SIP OPTIONS, d'un identifiant du dispositif à l'origine du message SIP OPTIONS, etc.

Dans l'exemple envisagé ici, on suppose que le serveur d'application 2 a été configuré avec une règle RULE selon laquelle la réponse RESP au message MOPT élaborée par le serveur d'application 2 correspond à la réponse reçue durant la période T du dispositif ayant le paramètre de priorité q le plus élevé parmi les dispositifs enregistrés auprès du cœur de réseau CN2 partageant l'identité publique IMPU2, autrement dit, la réponse RESP correspond à la réponse du dispositif considéré comme prioritaire parmi les dispositifs D2-1, D2-2,...,D2-R ayant répondu durant la période T.

Le serveur d'application 2 identifie le dispositif prioritaire noté D2-k0 parmi les dispositifs D2-1, D2-2,...,D2-R ayant répondu pendant la période T, en analysant les paramètres de priorité q1, q2,..., qR reçus lors de l'étape E20 du serveur d'enregistrement 3 : plus précisément, il identifie le dispositif prioritaire D2-k0 associé au paramètre de priorité qk0 supérieur à tous les paramètres qk, k=1,...,R, et k≠k0, et ayant répondu au message secondaire de découverte durant la période T.

S'il identifie, au cours de cette analyse, deux dispositifs prioritaires parmi les dispositifs D2-1, D2-2,...,D2-R (autrement dit, deux dispositifs ayant le même paramètre de priorité supérieur aux paramètres de priorité des autres dispositifs), le serveur d'application 2 sélectionne le dispositif prioritaire ayant répondu durant la période T et ayant la période d'expiration d'enregistrement EXP la plus élevée parmi les périodes d'expiration d'enregistrement transmises au cours de l'étape E20 par le serveur d'enregistrement 3. Autrement dit, la réponse RESP élaborée par le serveur d'application 2 correspond à la réponse reçue dans la période T du dispositif prioritaire qui s'est le plus récemment enregistré ou ré-enregistré.

En variante, d'autres règles peuvent être appliquées par le serveur d'application 2 pour élaborer la réponse RESP au message SIP OPTIONS MOPT reçu du dispositif D1.

Ainsi, par exemple, la réponse RESP élaborée par le serveur d'application 2 peut correspondre à la réponse reçue des dispositifs D2-1,..., D2-R durant la période T contenant le plus de services (ou « feature tags ») ou de capacités, ou qui contient un type particulier de services ou de capacités, etc.

En variante, la réponse RESP peut être un message SIP 200 OK contenant l'ensemble des capacités de chaque dispositif enregistré D2-k ayant répondu au message MOPTk pendant la période de temps T, de sorte à informer le dispositif D1 de l'étendue des capacités de l'ensemble des dispositifs partageant l'identité publique IMPU2 et enregistrés auprès du cœur de réseau CN2.

Selon une autre variante encore, la réponse RESP peut être un message SIP 200 OK ne contenant qu'une sélection des capacités de chaque dispositif enregistré D2-k ayant répondu au message MOPTk pendant la période de temps T, ou les capacités d'un sous-ensemble seulement des dispositifs enregistrés ayant répondu au message de découverte pendant la période de temps T.

La réponse RESP élaborée par le serveur d'application 2 est ensuite envoyée au dispositif D1 (étape 110), via le serveur d'enregistrement 3, selon le chemin inverse au chemin emprunté par le message MOPT.

Le dispositif D1 dispose ainsi d'une réponse au message SIP OPTIONS contenant des informations pertinentes, puisqu'élaborée à partir de réponses reçues durant une période prédéterminée de l'ensemble des dispositifs enregistrés auprès du cœur de réseau et partageant l'identité publique IMPU2, selon une stratégie de réponse choisie par l'opérateur du cœur de réseau ou par l'utilisateur de l'identité publique IMPU2.

Dans le mode de réalisation décrit ici, au cours de l'étape E50, le serveur d'application 2 envoie un message « secondaire » de découverte à l'ensemble des dispositifs D2-1, D2-2,...,D2-R enregistrés auprès du cœur de réseau CN2 et partageant l'identité publique IMPU2. Puis, au cours de l'étape E100, il élabore la réponse RESP à partir de la réponse reçue du dispositif prioritaire parmi les dispositifs qui ont répondu à ces messages de découverte secondaires pendant la période T. Dans un autre mode de réalisation, le serveur d'application 2 peut n'envoyer un message de découverte secondaire qu'au dispositif prioritaire parmi les dispositifs D2-1, D2-2,...,D2-R, et élaborer la réponse RESP à partir de la réponse reçue de cet unique dispositif. On notera toutefois, que ce mode de réalisation présente le risque que le serveur d'application 2 ne reçoive pas de réponse du dispositif prioritaire avant l'expiration de la période T, notamment si ce dispositif prioritaire est indisponible (par exemple parce qu'il n'a plus de connexion réseau ou se trouve hors couverture).

## Revendications

1. Procédé de traitement d'un message reçu (MOPT) en provenance d'un dispositif émetteur (D1), destiné à une identité publique (IMPU2) gérée par un cœur de réseau IP multimédia (CN2) et partagée par une pluralité de dispositifs (D2-1,...,D2-N), ledit message (MOPT) étant un message dit principal de découverte des capacités et d'un état d'un dit dispositif partageant l'identité publique, ledit procédé étant destiné à être mis en œuvre par un serveur d'application (2) du cœur de réseau, déclenché en amont d'une fonction de réplication (FORK) implémentée par un serveur d'enregistrement (3) du cœur de réseau gérant l'identité publique, ladite fonction de réplication (FORK) étant adaptée à répliquer des messages destinés à l'identité publique et à transmettre les messages répliqués vers ladite pluralité de dispositifs partageant l'identité publique,
ledit procédé de traitement comprenant, sur réception (E10) du message principal de découverte (MOPT), si plusieurs dispositifs parmi ladite pluralité de dispositifs partageant l'identité publique sont enregistrés auprès du cœur de réseau (E30) :
- une étape d'envoi (E50), à destination d'au moins un dispositif (D2-1,...,D2-R) de ladite pluralité de dispositifs enregistré auprès du cœur de réseau, d'un message (MOPT1, MOPT2,..., MOPTR) dit secondaire de découverte des capacités et d'un état de ce dispositif ;
- une étape d'élaboration (E100) d'une réponse (RESP) au message principal de découverte (MOPT) à partir d'au moins une réponse (RESP1, RESP2,..., RESPR) d'un dispositif (D2-1,...,D2-R) enregistré à un message secondaire de découverte reçue dans une période de temps prédéterminée, cette réponse étant représentative d'un état et des capacités de ce dispositif ; et
- une étape d'envoi (E110) au dispositif émetteur (D1) de la réponse (RESP) élaborée au message principal de découverte.

2. Procédé selon la revendication 1 comprenant une étape d'interrogation (E20) du serveur d'enregistrement (3) pour identifier les dispositifs (D2-1,...,D2-R) parmi ladite pluralité de dispositifs partageant l'identité publique enregistrés auprès du cœur de réseau et une information de joignabilité de ces dispositifs (AoC1,AoC2,...,AoCR).

3. Procédé selon la revendication 2 dans lequel :
- le cœur de réseau (CN2) met en œuvre le protocole d'initiation de session SIP ; et
- l'étape d'interrogation (E20) du serveur d'enregistrement (3) comprend l'envoi d'une requête SIP REGISTER au cœur de réseau sans adresse de contact.

4. Procédé selon la revendication 1 comprenant en outre une étape préalable d'abonnement du serveur d'application auprès du serveur d'enregistrement afin d'être notifié lorsqu'un dispositif de ladite pluralité de dispositifs partageant l'identité publique s'enregistre auprès du cœur de réseau.

5. Procédé selon la revendication 1 dans lequel la réponse (RESP) au message principal correspond à la réponse reçue d'un dispositif considéré comme prioritaire parmi les dispositifs enregistrés ayant répondu aux messages secondaires de découverte dans la période de temps prédéterminée.

6. Procédé selon la revendication 5 dans lequel le cœur de réseau (CN2) met en œuvre le protocole d'initiation de session SIP et le dispositif considéré comme prioritaire est le dispositif ayant le plus grand paramètre q tel que défini dans le document RFC3261 de l'IETF.

7. Procédé selon la revendication 5 dans lequel lorsqu'au moins deux dispositifs sont considérés comme prioritaires, la réponse au message principal correspond à la réponse reçue du dispositif prioritaire ayant la période d'expiration d'enregistrement la plus élevée parmi lesdits dispositifs prioritaires.

8. Procédé selon la revendication 1 dans lequel la réponse au message principal de découverte contient tout ou partie des capacités de chaque dispositif enregistré ayant répondu à un dit message secondaire de découverte pendant la période prédéterminée.

9. Procédé selon la revendication 1 dans lequel :
- le cœur de réseau (CN2) met en œuvre le protocole d'initiation de session SIP ; et
- le message principal (MOPT) et les messages secondaires (MOPT1,MOPT2,...,MOPTR) de découverte sont des messages SIP OPTIONS.

10. Serveur d'application (2) d'un cœur de réseau IP multimédia (CN2) gérant une identité publique (IMPU2) partagée par une pluralité de dispositifs (D2-1,...,D2-N), ledit serveur d'application étant déclenché en amont d'une fonction de réplication (FORK) implémentée par un serveur d'enregistrement (3) du cœur de réseau gérant l'identité publique, ladite fonction de réplication étant adaptée à répliquer des messages destinés à l'identité publique et à transmettre les messages répliqués vers ladite pluralité de dispositifs partageant l'identité publique, ledit serveur d'application comprenant :
- des moyens pour déterminer si plusieurs dispositifs (D2-1,...,D2-R) parmi ladite pluralité de dispositifs partageant l'identité publique sont enregistrés auprès du cœur de réseau, ces moyens étant activés sur réception d'un message (MOPT) dit principal de découverte des capacités et de l'état d'un dit dispositif partageant l'identité publique, ledit message principal provenant d'un dispositif émetteur (D1) et étant destiné à l'identité publique ;
- des moyens, activés le cas échéant :
∘ pour envoyer à destination d'au moins un dispositif (D2-1,...,D2-R) enregistré de ladite pluralité de dispositifs, un message (MOPT1,...,MOPTR) dit secondaire de découverte des capacités et d'un état de ce dispositif ;
∘ pour élaborer une réponse (RESP) au message principal de découverte à partir d'au moins une réponse (RESP1,RESP2,...,RESPR) à un message secondaire de découverte reçue dans une période de temps prédéterminée d'un dispositif enregistré, cette réponse étant représentative d'un état et des capacités de ce dispositif ; et
∘ pour envoyer au dispositif émetteur (D1) la réponse au message principal de découverte élaborée.

11. Système de communications (1) comprenant :
- une pluralité de dispositifs (D2-1,...,D2-N) partageant une identité publique (IMPU2) gérée par un cœur de réseau IP multimédia (CN2) ;
- un dispositif (D1) émetteur apte à émettre, à destination de ladite identité publique, un message principal (MOPT) de découverte des capacités et de l'état d'un dit dispositif partageant cette identité publique ; et
- un serveur d'application (2) du cœur de réseau apte à traiter ce message principal de découverte et conforme à la revendication 10.

12. Programme d'ordinateur comportant des instructions pour l'exécution des étapes du procédé de traitement selon la revendication 1 lorsque ledit programme est exécuté par un ordinateur.

13. Support d'enregistrement lisible par un ordinateur sur lequel est enregistré un programme d'ordinateur comprenant des instructions pour l'exécution des étapes du procédé de traitement selon la revendication 1.

## Patentansprüche

1. Verfahren zur Verarbeitung einer von einer Sendevorrichtung (D1) kommenden Nachricht (MOPT), die für eine öffentliche Identität (IMPU2) bestimmt ist, die von einem Multimedia-IP-Netzwerkkern (CN2) verwaltet und von einer Mehrzahl von Vorrichtungen (D2-1,...,D2-N) gemeinsam genutzt wird, wobei die Nachricht (MOPT) eine Hauptnachricht zur Feststellung der Kapazitäten und eines Zustands einer der Vorrichtungen, die die öffentliche Identität gemeinsam nutzen, ist, wobei das Verfahren dazu bestimmt ist, von einem Anwendungsserver (2) des Netzwerkkerns durchgeführt zu werden, der stromauf einer Replikationsfunktion (FORK) ausgelöst wird, die von einem Registrierungsserver (3) des Netzwerkkerns implementiert wird, der die öffentliche Identität verwaltet, wobei die Replikationsfunktion (FORK) geeignet ist, Nachrichten zu replizieren, die für die öffentliche Identität bestimmt sind, und die replizierten Nachrichten zu der Mehrzahl von Vorrichtungen zu übertragen, die die öffentliche Identität gemeinsam nutzen,
das Verarbeitungsverfahren umfassend, bei Empfang (E10) der Haupt-Feststellungsnachricht (MOPT), wenn mehrere Vorrichtungen von der Mehrzahl von Vorrichtungen, die die öffentliche Identität gemeinsam nutzen, beim Netzwerkkern registriert sind (E30):
- einen Schritt des Sendens (E50), an mindestens eine Vorrichtung (D2-1,...,D2-R) der Mehrzahl von Vorrichtungen, die beim Netzwerkkern registriert sind, einer Sekundärnachricht (MOPT1, MOPT2,..., MOPTR) zur Feststellung der Kapazitäten und eines Zustands dieser Vorrichtung;
- einen Schritt des Erstellens (E100) einer Antwort (RESP) auf die Haupt-Feststellungsnachricht (MOPT) anhand mindestens einer Antwort (RESP1, RESP2,..., RESPR) von einer registrierten Vorrichtung (D2-1,...,D2-R) auf eine Sekundär-Feststellungsnachricht, die in einem vorbestimmten Zeitraum empfangen wird, wobei diese Antwort für einen Zustand und die Kapazitäten dieser Vorrichtung repräsentativ ist; und
- einen Schritt des Sendens (E110) der erstellten Antwort (RESP) auf die Haupt-Feststellungsnachricht an die Sendevorrichtung (D1).

2. Verfahren nach Anspruch 1, umfassend einen Schritt des Abfragens (E20) des Registrierungsservers (3), um die Vorrichtungen (D2-1,...,D2-R) von der Mehrzahl von Vorrichtungen, die die öffentliche Identität gemeinsam nutzen, die beim Netzwerkkern registriert sind, zu identifizieren, und eine Erreichbarkeitsinformation dieser Vorrichtungen (AoC1,AoC2,...,AoCR).

3. Verfahren nach Anspruch 2 wobei:
- der Netzwerkkern (CN2) das Protokoll zur Initiierung einer SIP-Sitzung durchführt; und
- der Schritt des Abfragens (E20) des Registrierungsservers (3) das Senden einer SIP-REGISTER-Anfrage an den Netzwerkkern ohne Kontaktadresse umfasst.

4. Verfahren nach Anspruch 1, ferner umfassend einen vorhergehenden Schritt des Abonnierens des Anwendungsservers beim Registrierungsserver, um benachrichtigt zu werden, wenn eine Vorrichtung der Mehrzahl von Vorrichtungen, die die öffentliche Identität gemeinsam nutzen, sich beim Netzwerkkern registriert.

5. Verfahren nach Anspruch 1, wobei die Antwort (RESP) auf die Hauptnachricht der Antwort entspricht, die von einer Vorrichtung empfangen wird, die von den registrierten Vorrichtungen, die auf die Sekundär-Feststellungsnachrichten im vorbestimmten Zeitraum geantwortet haben, als vorrangig betrachtet wird.

6. Verfahren nach Anspruch 5, wobei der Netzwerkkern (CN2) das Protokoll zur Initiierung einer SIP-Sitzung durchführt und die Vorrichtung, die als vorrangig betrachtet wird, die Vorrichtung ist, die den größten q-Parameter, wie im Dokument RFC3261 der IETF festgelegt, aufweist.

7. Verfahren nach Anspruch 5, wobei, wenn mindestens zwei Vorrichtungen als vorrangig betrachtet werden, die Antwort auf die Hauptnachricht der Antwort entspricht, die von der vorrangigen Vorrichtung mit der höchsten Registrierungsablaufzeit von den vorrangigen Vorrichtungen empfangen wird.

8. Verfahren nach Anspruch 1, wobei die Antwort auf die Haupt-Feststellungsnachricht die gesamten oder einen Teil der Kapazitäten jeder registrierten Vorrichtung enthält, die auf eine der Sekundär-Feststellungsnachrichten während des vorbestimmten Zeitraums geantwortet hat.

9. Verfahren nach Anspruch 1 wobei:
- der Netzwerkkern (CN2) das Protokoll zur Initiierung einer SIP-Sitzung durchführt; und
- die Haupt- (MOPT) und die Sekundär-(MOPT1,MOPT2,...,MOPTR) Feststellungsnachrichten SIP-OPTIONS-Nachrichten sind.

10. Anwendungsserver (2) eines Multimedia-IP-Netzwerkkerns (CN2), der eine öffentliche Identität (IMPU2) verwaltet, die von einer Mehrzahl von Vorrichtungen (D2-1,...,D2-N) gemeinsam genutzt wird, wobei der Anwendungsserver stromauf einer Replikationsfunktion (FORK) ausgelöst wird, die von einem Registrierungsserver (3) des Netzwerkkerns implementiert wird, der die öffentliche Identität verwaltet, wobei die Replikationsfunktion geeignet ist, Nachrichten zu replizieren, die für die öffentliche Identität bestimmt sind, und die replizierten Nachrichten zu der Mehrzahl von Vorrichtungen zu übertragen, die die öffentliche Identität gemeinsam nutzen, der Anwendungsserver umfassend:
- Mittel zum Bestimmen, ob mehrere Vorrichtungen (D2-1,...,D2-R) von der Mehrzahl von Vorrichtungen, die die öffentliche Identität gemeinsam nutzen, beim Netzwerkkern registriert sind, wobei diese Mittel bei Empfang einer Hauptnachricht (MOPT) zur Feststellung der Kapazitäten und des Zustands einer der Vorrichtungen, die die öffentliche Identität gemeinsam nutzen, aktiviert werden, wobei die Hauptnachricht von einer Sendevorrichtung (D1) kommt und für die öffentliche Identität bestimmt ist;
- Mittel, die gegebenenfalls aktiviert werden:
o um an mindestens eine registrierte Vorrichtung (D2-1,...,D2-R) der Mehrzahl von Vorrichtungen eine Sekundärnachricht (MOPT1,...,MOPTR) zur Feststellung der Kapazitäten und eines Zustands dieser Vorrichtung zu senden;
o um eine Antwort (RESP) auf die Haupt-Feststellungsnachricht (MOPT) anhand mindestens einer Antwort (RESP1,RESP2,...,RESPR) auf eine Sekundär-Feststellungsnachricht, die in einem vorbestimmten Zeitraum von einer registrierten Vorrichtung empfangen wird, zu erstellen, wobei diese Antwort für einen Zustand und die Kapazitäten dieser Vorrichtung repräsentativ ist; und
o um die erstellte Antwort auf die Haupt-Feststellungsnachricht an die Sendevorrichtung (D1) zu senden.

11. Kommunikationssystem (1) umfassend:
- eine Mehrzahl von Vorrichtungen (D2-1,...,D2-N), die eine öffentliche Identität (IMPU2) gemeinsam nutzen, die von einem Multimedia-IP-Netzwerkkern (CN2) verwaltet wird;
- eine Sendevorrichtung (D1), die geeignet ist, an die öffentliche Identität eine Hauptnachricht (MOPT) zur Feststellung der Kapazitäten und des Zustands einer der Vorrichtungen, die diese öffentliche Identität gemeinsam nutzen, zu senden; und
- einen Anwendungsserver (2) des Netzwerkkerns, der geeignet ist, diese Haupt-Feststellungsnachricht zu verarbeiten, und Anspruch 10 entspricht.

12. Computerprogramm, aufweisend Anweisungen für die Ausführung der Schritte des Verarbeitungsverfahrens nach Anspruch 1, wenn das Programm von einem Computer ausgeführt wird.

13. Computerlesbares Speichermedium, auf dem ein Computerprogramm gespeichert ist, das Anweisungen für die Ausführung der Schritte des Verarbeitungsverfahrens nach Anspruch 1 umfasst.

## Claims

1. Method for processing a message (MOPT) received from a transmitting device (D1), intended for a public identity (IMPU2) managed by a multimedia IP core network (CN2) and shared by a plurality of devices (D2-1, ..., D2-N), said message (MOPT) being a so-called main message of discovery of the capacities and of a state of one said device sharing the public identity, said method being intended to be implemented by an application server (2) of the core network, triggered upstream of a replication function (FORK) implemented by a registration server (3) of the core network managing the public identity, said replication function (FORK) being adapted to replicate messages intended for the public identity and to transmit the replicated messages to said plurality of devices sharing the public identity,
said processing method comprising, on reception (E10) of the main discovery message (MOPT), if several devices out of said plurality of devices sharing the public identity are registered with the core network (E30) :
- a step of sending (E50), to at least one device (D2-1, ..., D2-R) of said plurality of devices registered with the core network, of a so-called secondary message (MOPT1, MOPT2, ..., MOPTR) of discovery of the capacities and of a state of this device;
- a step of producing (E100) of a response (RESP) to the main discovery message (MOPT) from at least one response (RESP1, RESP2, ..., RESPR) from a registered device (D2-1, ..., D2-R) to a secondary discovery message received in a predetermined time period, this response being representative of a state and of the capacities of this device; and
- a step of sending (E110), to the transmitting device (D1), of the response (RESP) generated to the main discovery message.

2. Method according to Claim 1, comprising a step of interrogation (E20) of the registration server (3) to identify the devices (D2-1, ..., D2-R) out of said plurality of said devices sharing the public identity registered with the core network and information on the reachability of these devices (AoC1, AoC2, ..., AoCR).

3. Method according to Claim 2, wherein:
- the core network (CN2) implements the session initiation protocol SIP; and
- the step of interrogation (E20) of the registration server (3) comprises the sending of an SIP REGISTER request to the core network without contact address.

4. Method according to Claim 1, further comprising a preliminary step of subscription of the application server to the registration server in order to be notified when a device of said plurality of devices sharing the public identity registers with the core network.

5. Method according to Claim 1, wherein the response (RESP) to the main message corresponds to the response received from a device considered as priority among the registered devices having responded to the secondary discovery messages in the predetermined time period.

6. Method according to Claim 5, wherein the core network (CN2) implements the session initiation protocol SIP and the device considered as priority is the device having the greatest parameter q as defined in the IETF document RCF3261.

7. Method according to Claim 5, wherein, when at least two devices are considered as priority, the response to the main message corresponds to the response received from the priority device having the highest registration expiration period out of said priority devices.

8. Method according to Claim 1, wherein the response to the main discovery message contains all or part of the capacities of each registered device having responded to one said secondary discovery message during the predetermined period.

9. Method according to Claim 1, wherein:
- the core network (CN2) implements the session initiation protocol SIP; and
- the main discovery message (MOPT) and the secondary discovery messages (MOPT1, MOPT2, ..., MOPTR) are SIP OPTIONS messages.

10. Application server (2) of a multimedia IP core network (CN2) managing a public identity (IMPU2) shared by a plurality of devices (D2-1, ..., D2-N), said application server being triggered upstream of a replication function (FORK) implemented by a registration server (3) of the core network managing the public identity, said replication function being adapted to replicate messages intended for the public identity and to transmit the replicated messages to said plurality of devices sharing the public identity, said application server comprising:
- means for determining whether several devices (D2-1, ..., D2-R) out of said plurality of devices sharing the public identity are registered with the core network, these means being activated on reception of a so-called main message (MOPT) of discovery of the capacities and of the state of one said device sharing the public identity, said main message originating from a transmitting server (D1) and being intended for the public identity;
- means, activated if necessary:
∘ to send, to at least one registered device (D2-1, ..., D2-R) of said plurality of devices, a so-called secondary message (MOPT1, ..., MOPTR) of discovery of the capacities and of a state of this device;
∘ to produce a response (RESP) to the main discovery message from at least one response (RESP1, RESP2, ..., RESPR) to a secondary discovery message received in a predetermined time period from a registered device, this response being representative of a state and of the capacities of this device; and
∘ to send, to the transmitting device (D1), the response to the main discovery message generated.

11. Communication system (1) comprising:
- a plurality of devices (D2-1, ..., D2-N) sharing a public identity (IMPU2) managed by a multimedia IP core network (CN2);
- a transmitting device (D1) capable of transmitting, to said public identity, a main message (MOPT) of discovery of the capacities and of the state of one said device sharing this public identity; and
- an application server (2) of the core network capable of processing this main discovery message and conforming to Claim 10.

12. Computer program comprising instructions for executing the steps of the processing method according to Claim 1 when said program is run by a computer.

13. Computer-readable storage medium on which is stored a computer program comprising instructions for executing the steps of the processing method according to Claim 1.
